# EUROPÄISCHE PATENTANMELDUNG

(11) **EP 3 789 686 A1**
(43) Veröffentlichungstag der Anmeldung: **10.03.2021**
(21) Anmeldenummer: 20191280.5
(22) Anmeldetag: 17.08.2020
(51) Int. Cl.: F24D 19/10, F24D 3/18, F25B 30/02, F25B 49/00

(54) **WÄRMEPUMPENSYSTEM**

(30) Priorität: 03.09.2019 DE 102019123513
(71) Anmelder: Vaillant GmbH, 42859 Remscheid (DE)
(72) Erfinder: Habenicht, Martin, 42857 Remscheid (DE); Lis, Raimund, 42369 Wuppertal (DE); Muessener, Matthias, 42499 Hückeswagen (DE)
(74) Vertreter: Popp, Carsten

(57) **Zusammenfassung**

Die Erfindung betrifft ein Wärmepumpensystem (1), aufweisend einen Kältekreis (2), einen Heizkreis (3) und einen Verflüssiger (4), über den der Kältekreis (2) und der Heizkreis (3) miteinander in Wärmeaustausch bringbar sind, dadurch gekennzeichnet, dass in dem Heizkreis (3) mindestens ein Strömungsbeeinflussungsmittel (5, 6) angeordnet ist, welches derart eingerichtet ist, dass es in Abhängigkeit eines Druckanstiegs im Heizkreis (3) zwischen Verflüssiger (4) und Strömungsbeeinflussungsmittel (5, 6) die Durchströmung des Heizkreises (3) zumindest reduziert oder blockiert.

## Beschreibung

Die Erfindung betrifft ein Wärmepumpensystem, ein Verfahren zum Betreiben eines Wärmepumpensystems sowie eine Verwendung mindestens eines in einem Heizkreis eines Wärmepumpensystems angeordneten Strömungsbeeinflussungsmittels. Die Erfindung kommt insbesondere als Sicherheitskonzept zur Absperrung des Heizkreises bei Wärmepumpen mit brennbaren Kältemitteln im Falle einer Leckage im Verflüssiger zur Anwendung.

Die Erfindung liegt auf dem Gebiet der Wärmepumpensysteme, die insbesondere zur Beheizung oder Kühlung von Wohngebäuden und/oder zur Warmwasserbereitung benutzt werden. Solche Wärmepumpensysteme benötigen zwei oder mehr Kreisläufe, von denen mindestens ein erster ein geschlossener (Heiz-)Kreislauf ist, der zumindest zum Teil im Inneren eines Gebäudes liegt und typischerweise im Wesentlichen mit Wasser oder Sole als Wärmeträgermedium betrieben wird. Über einen Wärmetauscher (sog. Verflüssiger) findet ein Wärmeaustausch mit einem zweiten (Kälte-)Kreislauf statt, der typischerweise mit einem Kältemittel betrieben wird.

Üblicherweise werden heutzutage nicht brennbare Sicherheitskältemittel, wie etwa R410A in Wärmepumpensystemen für Wohngebäude verwendet. Tritt Kältemittel aufgrund einer Leckage aus dem Kältekreis aus, besteht aufgrund der Nichtbrennbarkeit des ausgetretenen Gases (Kältemittel) keine Brandgefahr. Im Falle einer Leckage am Verflüssiger (Übergang zwischen Heizkreis und Kältekreis) tritt Kältemittel in den Heizkreis über und wird durch den Wasserumlauf im Heizkreis unkontrolliert verteilt. Bei Austritt z. B. an einem Entlüfter besteht aufgrund der Nichtbrennbarkeit des Sicherheitskältemittels auch hier keine Brandgefahr.

Aufgrund des allgemeinen Bestrebens nach besserer Umweltverträglichkeit von Betriebsmitteln, zu denen auch Kältemittel gehören, rücken natürliche und brennbare Kältemittel, insbesondere R290, immer mehr in den Fokus, da diese Kältemittel üblicherweise einen niedrigen GWP (Global Warming Potential) und somit eine vorteilhaft hohe Umweltverträglichkeit aufweisen.

Der aktuelle Stand der Technik bietet jedoch noch kein adäquates Sicherheitskonzept, das im Falle einer Leckage eines brennbaren Kältemittels im Verflüssiger einen primären Schutz vor Austritt des Kältemittels in den Heizkreis und damit (z. B. über Entlüftungseinrichtungen) in den dauerhaft bewohnten Hausbereich gewährleistet. Die brennbaren Kältemittel mit niedrigem GWP sind zudem teilweise schwerer als Luft und können sich daher am Ort des Austritts ansammeln. Hier besteht dann erhöhte Brandgefahr.

Es ist daher Aufgabe der Erfindung, ein Wärmepumpensystem bereitzustellen, das auch mit einem brennbaren Kältemittel einen möglichst sicheren Betrieb erlaubt. Insbesondere soll ein Eindringen von brennbarem Kältemittel in einen Wasser- oder Solekreislauf schnell unterbunden werden.

Diese Aufgabe wird gemäß den Merkmalen des Anspruchs 1 dadurch gelöst, dass in dem Heizkreis mindestens ein Strömungsbeeinflussungsmittel angeordnet ist, welches derart eingerichtet ist, dass es in Abhängigkeit eines Druckanstiegs im Heizkreis zwischen Verflüssiger und Strömungsbeeinflussungsmittel die Durchströmung des Heizkreises zumindest reduziert oder blockiert.

Vorteilhafte Ausgestaltungen ergeben sich durch die Merkmale der abhängigen Ansprüche.

Hierzu trägt ein Wärmepumpensystem bei, aufweisend einen Kältekreis, einen Heizkreis und einen Verflüssiger, über den der Kältekreis und der Heizkreis miteinander in Wärmeaustausch bringbar sind, wobei in dem Heizkreis mindestens ein Strömungsbeeinflussungsmittel angeordnet ist, welches derart eingerichtet ist, dass es in Abhängigkeit eines Druckanstiegs im Heizkreis zwischen Verflüssiger und Strömungsbeeinflussungsmittel die Durchströmung des Heizkreises zumindest reduziert oder blockiert.

Bei dem Wärmepumpensystem handelt es sich insbesondere um ein Wärmepumpensystem für ein (Wohn-)Gebäude. Das Wärmepumpensystem kann neben einer Wärmepumpe auch ein Heizgerät umfassen, welches in der Regel mit dem Heizkreis des Wärmepumpensystems gekoppelt ist. Die Reduzierung oder Blockierung der (weiteren) Durchströmung des Heizkreises erfolgt insbesondere automatisch. Hierzu kann das Strömungsbeeinflussungsmittel beispielsweise ein Einstellelement umfassen, welches automatisch (und/oder in Abhängigkeit eines Drucks bzw. einer Druckdifferenz) die Durchflussmenge durch das Strömungsbeeinflussungsmittel einstellen kann. Darüber hinaus erfolgt dies vorzugsweise so, dass der Heizkreis (vollständig) abgesperrt wird.

Nach einer vorteilhaften Ausgestaltung wird vorgeschlagen, dass in dem Kältekreis ein brennbares Kältemittel bereitgestellt ist. Vorzugsweise handelt es sich hierbei um das unter der Bezeichnung R290 bekannte brennbare Kältemittel.

Bevorzugt werden natürliche Kältemittel eingesetzt, wobei es sich um brennbare Stoffe handeln kann. Ein solches Kältemittel ist beispielsweise unter der Bezeichnung R290 bekannt. Häufig werden Alkane, zu denen beispielsweise auch Propan gehört, als Kältemittel eingesetzt, da sie geeignete Eigenschaften z. B. bezüglich der Abhängigkeit ihrer Siedetemperatur vom Druck und der Verdampfungswärme haben. Es können natürliche und künstliche Kältemittel eingesetzt werden, wobei hier natürliche und brennbare Kältemittel im Vordergrund stehen, insbesondere R290.

Insbesondere soll im Falle eines brennbaren Kältemittels ein Eindringen des brennbaren Kältemittels in den gebäudeinnenseitig liegenden Teil des Heizkreises möglichst vermieden werden. Hierzu kann vorgesehen sein, dass das mindestens eine Strömungsbeeinflussungsmittel gebäudeaußenseitig oder im Bereich einer Schnittstelle zwischen einer Gebäudeinnenseite und einer Gebäudeaußenseite angeordnet ist.

Nach einer weiteren vorteilhaften Ausgestaltung wird vorgeschlagen, dass ein erstes Strömungsbeeinflussungsmittel in einem Vorlauf des Heizkreises angeordnet ist. Der Vorlauf bezeichnet üblicherweise den von dem Verflüssiger weg gerichteten Teil des Heizkreises.

Nach einer weiteren vorteilhaften Ausgestaltung wird vorgeschlagen, dass das erste Strömungsbeeinflussungsmittel derart eingerichtet ist, dass es die Durchströmung des Vorlaufs blockiert, wenn der Druck im Heizkreis zwischen Verflüssiger und erstem Strömungsbeeinflussungsmittel auf einen Wert oberhalb eines vorgegebenen Grenzwertes ansteigt. Der vorgegebene Grenzwert (nach unten) kann dabei insbesondere im Bereich von 0,01 bar bis 0,3 bar über einem Heizungssystemdruck (einer mit dem Heizkreis gekoppelten Heizung des Gebäudes) vorgegebenen sein. Besonders bevorzugt kann jedoch vorgesehen sein, dass der Heizungssystemdruck als Grenzwert vorgegeben wird. Die (Gebäude-)Heizung kann dabei insbesondere mit dem Heizkreis gekoppelt bzw. verbunden sein. Alternativ oder kumulativ kann zumindest ein Teil der Heizung mit zumindest einem Abschnitt des Heizkreises gebildet sein. Der Grenzwert kann manuell fest eingestellt werden. Der Grenzwert kann auch in einem selbstlernenden Prozess festgelegt werden, wobei das Selbstlernen beispielsweise anhand von Druckschwankungen beim Betrieb erfolgt. Durch einen selbstlernenden Prozess zur Festlegung des Genzwertes können falsche Abschaltungen weiter reduziert werden.

Nach einer weiteren vorteilhaften Ausgestaltung wird vorgeschlagen, dass das erste Strömungsbeeinflussungsmittel derart eingerichtet ist, dass es die Durchströmung des Vorlaufs blockiert, wenn eine vorgegebene Druckdifferenz über das erste Strömungsbeeinflussungsmittel erreicht wird. Die Druckdifferenz liegt dabei zwischen Eintritt und Austritt des Strömungsbeeinflussungsmittels an, wobei der höhere Druck in der Regel Eintrittsseitig anliegt. Die vorgegebene Druckdifferenz (nach unten) kann dabei insbesondere im Bereich von 0,01 bar bis 0,3 bar vorgegebenen sein.

Insbesondere um (gezielt) auf schnelle Druckanstiege reagieren zu können, ist es auch denkbar, dass als Grenzwert ein bestimmter Druckanstieg pro Zeiteinheit vorgegeben wird. Dies bedeutet mit anderen Worten insbesondere, dass das erste Strömungsbeeinflussungsmittel derart eingerichtet ist, dass es die Durchströmung des Vorlaufs blockiert, wenn eine vorgegebene Druckdifferenz pro Zeiteinheit über das erste Strömungsbeeinflussungsmittel erreicht wird.

Nach einer weiteren vorteilhaften Ausgestaltung wird vorgeschlagen, dass es sich bei dem ersten Strömungsbeeinflussungsmittel um einen Druckminderer und/oder ein Ventil handelt. Vorzugsweise handelt es sich um einen auf den Heizungssystemdruck (einer mit dem Heizkreis gekoppelten Heizung des Gebäudes) eingestellten Druckminderer. Bei dem Ventil kann es sich um ein solches handeln, das bei einer bestimmten Druckdifferenz den Durchfluss stoppt.

Nach einer weiteren vorteilhaften Ausgestaltung wird vorgeschlagen, dass ein zweites Strömungsbeeinflussungsmittel in einem Rücklauf des Heizkreises angeordnet ist. Der Rücklauf bezeichnet üblicherweise den zu dem Verflüssiger hin gerichteten Teil des Heizkreises.

Nach einer weiteren vorteilhaften Ausgestaltung wird vorgeschlagen, dass es sich bei dem zweiten Strömungsbeeinflussungsmittel um ein Rückschlagventil handelt.

Das erste Strömungsbeeinflussungsmittel und das zweite Strömungsbeeinflussungsmittel können gemeinsam eine Sicherheitseinrichtung bilden, um ein Eindringen von brennbarem Kältemittel in ein (Wohn-)Gebäude zu verhindern.

Nach einem weiteren Aspekt wird ein Verfahren zum Betreiben eines Wärmepumpensystems, aufweisend einen Kältekreis, einen Heizkreis und einen Verflüssiger, über den der Kältekreis und der Heizkreis miteinander in Wärmeaustausch stehen, vorgeschlagen, wobei das Verfahren zumindest folgende Schritte umfasst:
a) Zirkulieren eines brennbaren Kältemittels in dem Kältekreis,
b) Erfassen eines Druckanstiegs in dem Heizkreis zwischen dem Verflüssiger und mindestens einem in dem Heizkreis angeordneten Strömungsbeeinflussungsmittel,
c) Reduzieren der Durchströmung des Heizkreises mittels des Strömungsbeeinflussungsmittels.

Nach einer vorteilhaften Ausgestaltung wird vorgeschlagen, dass das Verfahren mit einem hier beschriebenen Wärmepumpensystem durchgeführt wird.

Nach einem weiteren Aspekt wird auch eine Verwendung mindestens eines in einem Heizkreis eines Wärmepumpensystems angeordneten Strömungsbeeinflussungsmittels zum Verhindern einer Durchströmung des Heizkreises mit brennbarem Kühlmittel vorgeschlagen. Insbesondere kann hierzu ein hier beschriebenes Wärmepumpensystem verwendet werden.

Die im Zusammenhang mit dem Wärmepumpensystem erörterten Details, Merkmale und vorteilhaften Ausgestaltungen können entsprechend auch bei dem hier vorgestellten Verfahren und/oder der Verwendung auftreten und umgekehrt. Insoweit wird auf die dortigen Ausführungen zur näheren Charakterisierung der Merkmale vollumfänglich Bezug genommen.

Die Erfindung wird nun anhand der Figuren detailliert erläutert.

Es stellen dar:
Figur 1: beispielhaft und schematisch ein hier beschriebenes Wärmepumpensystem, und
Figur 2: beispielhaft und schematisch einen Ablauf eines hier beschriebenen Verfahrens.

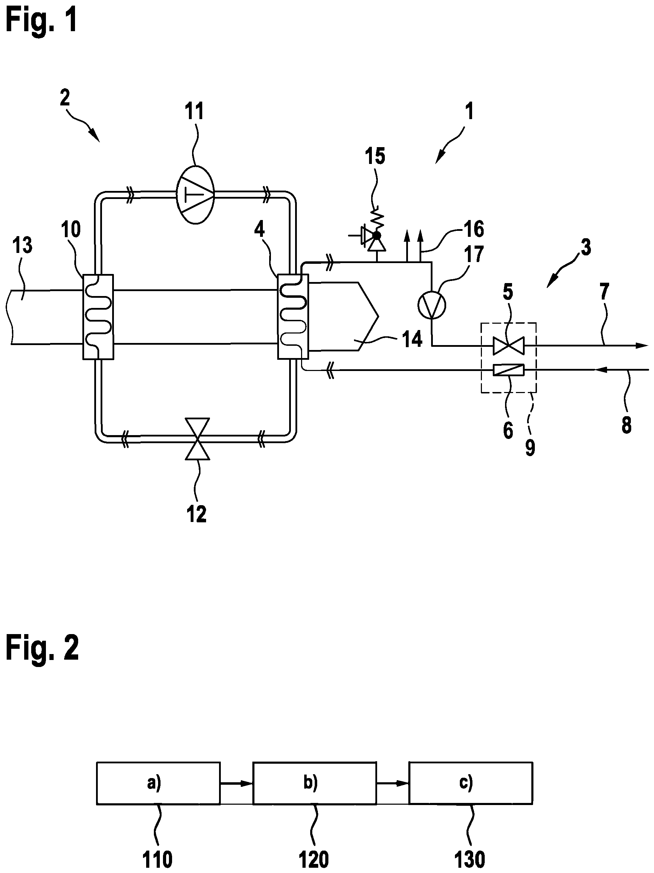

Figur 1 zeigt beispielhaft und schematisch ein hier beschriebenes Wärmepumpensystem 1. Das Wärmepumpensystem 1 weist einen Kältekreis 2, einen Heizkreis 3 und einen Verflüssiger 4 auf, über den der Kältekreis 2 und der Heizkreis 3 miteinander in Wärmeaustausch bringbar sind. Beispielhaft weist der Kältekreis 2 hier zusätzlich zu dem Verflüssiger 4 auch einen Verdampfer 10, einen Verdichter 11 und ein Expansionsventil 12 auf.

Über das Wärmepumpensystem 1 kann Umweltwärme 13 in Heizwärme 14 umgewandelt werden. Dazu kann das in einem gebäudeaußenseitig verlaufenden Kältekreis 2 zirkulierende Kältemittel durch die Umweltwärme 13 erwärmt werden. Diese Wärme kann anschließend über einen Verflüssiger 4 an das in dem (ggf. zumindest teilweise gebäudeinnenseitig verlaufenden) Heizkreis 3 zirkulierende Medium (Wasser und/oder Sole) übertragen werden, um dieses zu erwärmen.

Das Wärmepumpensystem zeichnet sich dadurch aus, dass in dem Heizkreis 3 mindestens ein Strömungsbeeinflussungsmittel 5, 6 angeordnet ist, welches derart eingerichtet ist, dass es in Abhängigkeit eines Druckanstiegs im Heizkreis 3 zwischen Verflüssiger 4 und Strömungsbeeinflussungsmittel 5, 6 die Durchströmung des Heizkreises 3 (automatisch) zumindest reduziert oder blockiert. Als Kältemittel zirkuliert hier beispielsweise ein brennbares Kältemittel, wie etwa R290 in dem Kältekreis 2.

in dem Heizkreis kann weiterhin beispielhaft mindestens ein Sicherheitsventil 15, mindestens ein Entlüfter 16 und/oder ein Verdichter 17 angeordnet sein. Das Sicherheitsventil 15 kann dazu beitragen, einen ungewollt hohen Druckanstieg in dem Teil des Heizkreises 3 zu verhindern, der durch das mindestens eine Strömungsbeeinflussungsmittel 5, 6 abgesperrt ist. Der mindestens eine Entlüfter 16 kann dazu beitragen kleinere Druckschwankungen im Heizkreis 3 auszugleichen, die beispielsweise aufgrund von Gasblasen im Medium des Heizkreises 3 entstehen können. Dies kann auch dazu beitragen, dass das mindestens eine Strömungsbeeinflussungsmittel 5, 6 erst bei signifikanteren Druckanstiegen eingreift, die nicht auf Gasblasen, sondern auf eine Leckage im Verflüssiger 4 zurückzuführen sind.

Hier ist beispielsweise ein erstes Strömungsbeeinflussungsmittel in einem Vorlauf 7 des Heizkreises 3 angeordnet. Das erste Strömungsbeeinflussungsmittel 5 ist dabei derart eingerichtet, dass es die Durchströmung des Vorlaufs 7 blockiert bzw. absperrt, wenn der Druck im Heizkreis 3 zwischen Verflüssiger 4 und erstem Strömungsbeeinflussungsmittel 5 auf einen Wert oberhalb eines vorgegebenen Grenzwertes ansteigt. Alternativ oder kumulativ kann das das erste Strömungsbeeinflussungsmittel 5 derart eingerichtet sein, dass es die Durchströmung des Vorlaufs 7 blockiert bzw. absperrt, wenn eine vorgegebene Druckdifferenz über das erste Strömungsbeeinflussungsmittel 5 erreicht wird.

Beispielhaft handelt es sich in Fig. 1 bei dem ersten Strömungsbeeinflussungsmittel 5 um einen Druckminderer. Der Druckminderer ist in diesem Zusammenhang beispielhaft auf den Heizungssystemdruck eingestellt. Es kann sich jedoch bei dem ersten Strömungsbeeinflussungsmittel 5 auch um ein Ventil handeln.

Beispielhaft ist hier weiterhin ein zweites Strömungsbeeinflussungsmittel 6 in einem Rücklauf 8 des Heizkreises 3 angeordnet. Bei dem zweiten Strömungsbeeinflussungsmittel 6 handelt es sich hier um ein Rückschlagventil.

Das erste Strömungsbeeinflussungsmittel 5 und das zweite Strömungsbeeinflussungsmittel 6 bilden hier gemeinsam eine Sicherheitseinrichtung 9, um ein Eindringen von brennbarem Kältemittel in ein (Wohn-)Gebäude zu verhindern.

Im Falle einer Leckage des Verflüssigers 4 bewirkt der Kältemittelübertritt vom Kältekreis 2 über den defekten Verflüssiger 4 in den Heizkreis 3 einen Druckanstieg im Heizkreis 3. Ein beispielsweise auf den Heizungssystemdruck eingestellter Druckminderer 5 im Vorlauf 7 versperrt in diesem Falle die Verbindung zum Heizungssystem und verhindert somit den Übergang des Kältemittels. Im Heizungsrücklauf 8 verhindert ein Rückschlagventil 6 den Übergang des Kältemittels in den Heizkreis. Anstelle des Druckminderers kann auch ein Ventil verwendet werden, das bei einer bestimmten Druckdifferenz den Durchfluss stoppt.

Figur 2 zeigt beispielhaft und schematisch einen Ablauf eines hier beschriebenen Verfahrens. Das Verfahren dient zum Betreiben eines Wärmepumpensystems 1, aufweisend einen Kältekreis 2, einen Heizkreis 3 und einen Verflüssiger 4, über den der Kältekreis 2 und der Heizkreis 3 miteinander in Wärmeaustausch stehen. Die mit den Blöcken 110, 120 und 130 gezeigte Reihenfolge der Schritte a), b) und c) ist beispielhaft und kann so zumindest einmal bei einem regulären Betriebsablauf durchlaufen werden. Darüber hinaus können zumindest die Schritte a) und b) sowie a) und c) auch zumindest teilweise parallel oder gleichzeitig ablaufen.

In Block 110 erfolgt gemäß Schritt a) ein (aktives) Zirkulieren eines brennbaren Kältemittels in dem Kältekreis 2. In Block 120 erfolgt gemäß Schritt b) ein Erfassen eines Druckanstiegs in dem Heizkreis 3 zwischen dem Verflüssiger 4 und mindestens einem in dem Heizkreis 3 angeordneten Strömungsbeeinflussungsmittel 5, 6. In Block 130 erfolgt gemäß Schritt c) ein (automatisches) Reduzieren der Durchströmung des Heizkreises 3 mittels des Strömungsbeeinflussungsmittels 5, 6.

Das Verfahren kann beispielsweise mit einem hier auch beschriebenen Wärmepumpensystem 1 durchgeführt werden. Das mindestens eine Strömungsbeeinflussungsmittels 5, 6 kann insbesondere eingesetzt werden, um eine Durchströmung des Heizkreises 3 mit brennbarem Kühlmittel zu verhindern.

Somit wird ein Wärmepumpensystem bereitgestellt, das auch mit einem brennbaren Kältemittel einen möglichst sicheren Betrieb erlaubt. Insbesondere kann ein Eindringen von brennbarem Kältemittel in einen Wasser- oder Solekreislauf schnell unterbunden werden.

### Bezugszeichenliste

- 1: Wärmepumpensystem
- 2: Kältekreis
- 3: Heizkreis
- 4: Verflüssiger
- 5: erstes Strömungsbeeinflussungsmittel
- 6: zweites Strömungsbeeinflussungsmittel
- 7: Vorlauf
- 8: Rücklauf
- 9: Sicherheitseinrichtung
- 10: Verdampfer
- 11: Verdichter
- 12: Expansionsventil
- 13: Umweltwärme
- 14: Heizwärme
- 15: Sicherheitsventil
- 16: Entlüfter
- 17: Heizkreispumpe

## Patentansprüche

1. Wärmepumpensystem (1), aufweisend einen Kältekreis (2), einen Heizkreis (3) und einen Verflüssiger (4), über den der Kältekreis (2) und der Heizkreis (3) miteinander in Wärmeaustausch bringbar sind, **dadurch gekennzeichnet, dass** in dem Heizkreis (3) mindestens ein Strömungsbeeinflussungsmittel (5, 6) angeordnet ist, welches derart eingerichtet ist, dass es in Abhängigkeit eines Druckanstiegs im Heizkreis (3) zwischen Verflüssiger (4) und Strömungsbeeinflussungsmittel (5, 6) die Durchströmung des Heizkreises (3) zumindest reduziert oder blockiert.

2. Wärmepumpensystem (1) nach Anspruch 1, weiterhin umfassend ein Heizgerät, welches mit dem Heizkreis (3) des Wärmepumpensystems (1) gekoppelt ist.

3. Wärmepumpensystem (1) nach Anspruch 1 oder 2, wobei in dem Kältekreis (2) ein brennbares Kältemittel bereitgestellt ist.

4. Wärmepumpensystem (1) nach einem der vorhergehenden Ansprüche, wobei ein erstes Strömungsbeeinflussungsmittel (5) in einem Vorlauf (7) des Heizkreises (3) angeordnet ist.

5. Wärmepumpensystem (1) nach Anspruch 4, wobei das erste Strömungsbeeinflussungsmittel (5) derart eingerichtet ist, dass es die Durchströmung des Vorlaufs (7) blockiert, wenn der Druck im Heizkreis (3) zwischen Verflüssiger (4) und erstem Strömungsbeeinflussungsmittel (5) auf einen Wert oberhalb eines vorgegebenen Grenzwertes ansteigt.

6. Wärmepumpensystem (1) nach Anspruch 4 oder 5, wobei das erste Strömungsbeeinflussungsmittel (5) derart eingerichtet ist, dass es die Durchströmung des Vorlaufs (7) blockiert, wenn eine vorgegebene Druckdifferenz über das erste Strömungsbeeinflussungsmittel (5) erreicht wird.

7. Wärmepumpensystem (1) nach einem der Ansprüche 4 bis 6, wobei es sich bei dem ersten Strömungsbeeinflussungsmittel (5) um einen Druckminderer handelt.

8. Wärmepumpensystem (1) nach Anspruch 7, wobei es sich bei dem ersten Strömungsbeeinflussungsmittel (5) um einen auf den Heizungssystemdruck einer mit dem Heizkreis (3) gekoppelten Heizung eines Gebäudes eingestellten Druckminderer handelt.

9. Wärmepumpensystem (1) nach einem der Ansprüche 4 bis 6, wobei es sich bei dem ersten Strömungsbeeinflussungsmittel (5) um ein Ventil handelt.

10. Wärmepumpensystem (1) nach einem der vorhergehenden Ansprüche, wobei ein zweites Strömungsbeeinflussungsmittel (6) in einem Rücklauf (8) des Heizkreises (3) angeordnet ist.

11. Wärmepumpensystem (1) nach Anspruch 10, wobei es sich bei dem zweiten Strömungsbeeinflussungsmittel (6) um ein Rückschlagventil handelt.

12. Wärmepumpensystem (1) nach einem der vorhergehenden Ansprüche, wobei das erste Strömungsbeeinflussungsmittel (5) und das zweite Strömungsbeeinflussungsmittel (6) gemeinsam eine Sicherheitseinrichtung (9) bilden, um ein Eindringen von brennbarem Kältemittel in ein Gebäude zu verhindern.

13. Verfahren zum Betreiben eines Wärmepumpensystems (1), aufweisend einen Kältekreis (2), einen Heizkreis (3) und einen Verflüssiger (4), über den der Kältekreis (2) und der Heizkreis (3) miteinander in Wärmeaustausch stehen, wobei das Verfahren zumindest folgende Schritte umfasst:
a) Zirkulieren eines brennbaren Kältemittels in dem Kältekreis (2),
b) Erfassen eines Druckanstiegs in dem Heizkreis (3) zwischen dem Verflüssiger (4) und mindestens einem in dem Heizkreis (3) angeordneten Strömungsbeeinflussungsmittel (5, 6),
c) Reduzieren der Durchströmung des Heizkreises (3) mittels des Strömungsbeeinflussungsmittels (5, 6).

14. Verfahren nach Anspruch 13, welches mit einem Wärmepumpensystem (1) nach einem der Ansprüche 1 bis 12 durchgeführt wird.

15. Verwendung mindestens eines in einem Heizkreis (3) eines Wärmepumpensystems (1) angeordneten Strömungsbeeinflussungsmittels (5, 6) zum Verhindern einer Durchströmung des Heizkreises (3) mit brennbarem Kühlmittel.
